(19)

**Europäisches Patentamt**
**European Patent Office**
**Office européen des brevets**

(11) **EP 1 723 575 B1**

(12) **EUROPÄISCHE PATENTSCHRIFT**

(45) Veröffentlichungstag und Bekanntmachung des Hinweises auf die Patenterteilung:
**19.10.2011   Patentblatt 2011/42**

(51) Int Cl.:
***G06K 7/00*** *(2006.01)*

(21) Anmeldenummer: **05706531.0**

(86) Internationale Anmeldenummer:
**PCT/CH2005/000112**

(22) Anmeldetag: **28.02.2005**

(87) Internationale Veröffentlichungsnummer:
**WO 2005/086069 (15.09.2005 Gazette 2005/37)**

(54) **VERFAHREN ZUM ERKENNEN VON IDENTIFIKATIONSMEDIEN**

METHOD FOR RECOGNIZING IDENTIFICATION MEDIA

PROCEDE POUR RECONNAITRE DES MOYENS D'IDENTIFICATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.03.2004   CH 351042004**

(43) Veröffentlichungstag der Anmeldung:
**22.11.2006   Patentblatt 2006/47**

(60) Teilanmeldung:
**10009939.9 / 2 256 662**

(73) Patentinhaber: **Legic Identsystems AG**
**8623 Wetzikon (CH)**

(72) Erfinder:
• **PLÜSS, Marcel**
  **CH-8632 Tann (CH)**
• **KOCH, Andreas**
  **78315 Radolfzell (DE)**
• **HAUSMANN, Peter**
  **CH-8118 Pfaffhausen (CH)**

(74) Vertreter: **Rentsch Partner AG**
**Rechtsanwälte und Patentanwälte**
**Fraumünsterstrasse 9**
**Postfach 2441**
**8022 Zürich (CH)**

(56) Entgegenhaltungen:
**EP-A- 0 944 014    WO-A-01/95243**

EP 1 723 575 B1

**Beschreibung**

Die Erfindung betrifft ein Verfahren zum Erkennen von Identifikationsmedien im Kommunikationsbereich einer Antenne eines Schreib/Lesegeräts gemäss Oberbegriff von Patentanspruch 1.

Es ist bekannt, dass zwischen einer Antenne eines auf dem Prinzip der induktiven Kopplung eines HF-Feldes beruhenden Schreib/Lesegerätes und einem leitenden Gegenstand, z.B. einem Identifikationsmedium, in der Nähe der Antenne eine induktive Kopplung entsteht, sobald das HF-Feld eingeschaltet ist.

Auf dieser induktiven Kopplung beruht bei RFID-Systemen (Radio Frequency Identification) die berührungslose Kommunikation zwischen einem Identifikationsmedium und einem Schreib/Lesegerät. Bei einem Schreib/Lesegerät mit Netzanschluss, bei welchem der Stromverbrauch keine Rolle spielt, kann das HF-Feld beliebig oft und lange eingeschaltet werden, um ein Identifikationsmedium im Kommunikationsbereich zu suchen und eine Kommunikation aufzubauen. Entsprechend erfolgt bei solchen Schreib/Lesegeräten der Kommunikationsaufbau mittels einem Kommunikationssignal zur Authentifizierung eines passiven Identifikationsmediums. Dazu wird z.B. alle 200 ms das HF-Feld eingeschaltet, ein Authentifizierungssignal (mit Modulation) von einigen ms Dauer ausgesendet und auf eine Antwort gewartet. Für batteriebetriebene Schreib/Lesegeräte ist dieses Verfahren wegen des relativ hohen Stromverbrauch nicht optimal. Hier wäre es sehr vorteilhaft, das Kommunikationssignal erst zu senden, wenn sich ein Identifikationsmedium im Kommunikationsbetreich der Antenne eines Schreib/Lesegeräts befindet. Das Problem ist, zu erkennen, wann dies der Fall ist. Näherungsdetektoren zur Lösung dieses Problems, z.B. optische, erfordern zusätzliche Schaltungen und sie reagieren auf irgendwelche Objekte - sie können nicht spezifisch ein Identifikationsmedium bzw. dessen HF-Feld-Kopplung anzeigen.

Aus der EP 0 944 014 ist ein Verfahren bekannt, welches jedoch nur im tieferen HF-Bereich, d.h. im bisherigen Standardbereich von 125 KHz, eine Erfassung von Identifikationsmedien in der Nähe einer Schreib/Lesestation ermöglichen soll. Dieses Verfahren ist jedoch nicht anwendbar für RFID-Systeme hoher Leistung mit Trägerfrequenzen im MHz-Bereich, vorzugsweise über 5 MHz, bzw. 10 MHz, und insbesondere bei 13.56 MHz, wo viel höhere Informationsübertragungsraten und viel anspruchsvollere und weitere Anwendungen möglich sind als im Standard 125KHz Bereich. Solche Hochleistungssysteme im MHz-Bereich sind z.B. aus der WO 97/34265 bekannt.

Das Verfahren gemäss EP 0 944 014 beruht auf der Anregung der Resonanzschwingung einer Antenne mittels einem Einzelpuls und dem Vermessen des Abklingverhaltens dieses Signals. Dabei wird mit reduziertem Strom ein kurzer, rechteckförmiger Einzelpuls von z.B. 2 us Dauer (d.h. viel kürzer als eine Grundschwingung von ca. 8 us bei 125 KHz) erzeugt und damit eine Sendeantenne zur Eigenschwingung mit ihrer Resonanzfrequenz angeregt. Nach einer Wartezeit von z.B. 200 us (entsprechend ca. 25 Grundschwingungen), während welcher das Einzel-Signal abklingt, wird über eine Empfangsantenne während z.B. 20 us das abgeklungene Einzelpuls-Signat gemessen. Mit einem Identifikationsmedium in der Nähe des Schreib/Lesegeräts klingt das Signal stärker ab als ohne. Entsprechend wird auf die Anwesenheit eines Identifikationsmediums geschlossen, falls das Einzelpuls-Signal bzw. die Eigenschwingung unter einen bestimmten Wert abklingt.

Dieses Verfahren für den 125 KHz-Bereich könnte jedoch bei Systemen hoher Leistung im MHz-Bereich aus mehreren Gründen gar nicht realisiert werden: Ein Einzelpuls, welcher wesentlich kürzer ist als die Grundschwingung von z.B. 0.1 us bei 10 MHz kann nicht realisiert werden und das Abklingen eines Einzelpulses bzw. einer Eigenschwingung, welches hier 100-mal rascher erfolgen muss als im 125 KHz-Bereich, könnte gar nicht gemessen werden und noch weniger ein Einfluss eines Identifikationsmediums auf das Abklingen eines Einzelpulses. Dieses Verfahren gemäss EP 0 944 014 weist noch weitere Nachteile auf: Das Erzeugen eines kurzen Einzelpulses, weiches nicht der Grundschwingung für die HF-Kommunikation entspricht, erfordert eine zusätzliche Schaltung. Während der Wartezeit muss diese Schaltung aktiv sein. Mit einem, mit reduziertem Strom erzeugten Einzelpuls können Identifikationsmedien nicht im ganzen Kommunikationsbereich, im welchem die HF-Kommunikation mit höherer Leistung erfolgt, detektiert werden. Dieses bekannte Verfahren ist auch nicht geeignet zum Erkennen von Identifikationsmedien mit einer Resonanzfrequenz, welche sich von jener der Antennen des Schreib/Lesegeräts deutlich unterscheidet

Relativ langsame Messverfahren des Abklingverhaltens von Eigenschwingungen für Standardsysteme mit 125 KHz durch Anregen der Antenne mit ihrer Eigenfrequenz, Abschalten und Messen des Abklingverhaltens dieser Eigenschwingungen in einer Messzeit von z.B. 0.2-1 ms (z.B. indem ein Anfangswert und ein Endwert der Amplituden in der Messzeit gemessen werden oder indem die Anzahl Schwingungen 20 bis zum Abklingen auf einen bestimmten Schwellwert gezählt werden) können bei Hochleistungssystemen im MHz-Bereich vorzugsweise bei mindestens 5 MHz bzw. bei mindestens 10 MHz und insbesondere bei 13.56 MHz mit den bekannten Mikroprozessoren nicht ausgeführt werden. Insbesondere muss z.B. bei einem 13.56 MHz-System die Eigenschwingung in 2.4 us vollständig auf den Wert 0 abgeklungen sein, damit hier eine Kommunikation ausgeführt werden kann. In dieser sehr kurzen Zeit könnte gar kein Abklingverhalten gemessen werden.

WO 03/052672 beschreibt eine Lesevorrichtung zum kontaktlosen Lesen mittels induktiver Kopplung von Daten aus integrierten Schaltkreisen, die beispielsweise in Smartcards, Tags oder Ausweisen enthalten sind. Die Lesevorrichtung gemäss WO 03/052672 generiert als Abfragesignal jeweils Elektromagnetfeldpulse mit einer Pulslänge von 10-50μs

und umfasst eine Datenempfangsschaltung mit einer Gleichrichterdiode und einem Tiefpassfilter um aus dem Antwortsignal an der Antenne ein umhüllendes Signal zu erzeugen, das umhüllende Pulse ausweist, die in ihrer Pulsdauer jeweils den Elektromagnetfeldpulsen des Abfragesignals entsprechen. Die Lesevorrichtung ist eingerichtet, basierend auf einem Vergleich von Abfragesignal und Antwortsignal Identifikationsmedien in seinem Kommunikationsbereich zu detektieren.

Aufgabe der vorliegenden Erfindung ist es daher, die bisherigen Nachteile und Beschränkungen zu überwinden und ein Verfahren zum Erkennen aller Identifikationsmedien im Kommunikationsbereich eines Schreib/Lesegeräts bei RFID Systemen hoher Leistung mit Trägerfrequenzen im MHz-Bereich und bei gleichzeitig minimiertem Stromverbrauch zu schaffen, was insbesondere für batteriebetriebene Schreib/Lesegeräte sehr wichtig ist. Überdies sollen auch Störeinflüsse der Umgebung auf das Antennenfeld minimiert werden können, so dass ein Identifikationsmedium sicherer detektiert werden kann. Auch die Erkennung von Identifikationsmedien, deren Resonanzfrequenz von jener der Antenne deutlich abweicht, soll ermöglicht werden.

Diese Aufgabe wird erfindungsgemäss gelöst durch ein Verfahren nach Anspruch 1 und durch ein Schreib/Lesegerät nach Anspruch 22. Die abhängigen Patentansprüche betreffen Weiterentwicklungen der Erfindung mit zusätzlichen Verbesserungen des Verfahrens bezüglich Energieeinsparung, sicherem Erkennen von Identifikationsmedien und Kompensation von Störeinflüssen. Eine besonders vorteilhafte Ausführung besteht darin, dass das Antwortsignal der laufenden Messperiode als Referenzwert für die nächste Messperiode eingesetzt wird.

Im Folgenden wird die Erfindung anhand von Figuren und Beispielen weiter erläutert. Dabei zeigen

Fig. 1    ein erfindungsgemässes Schreib/Lesegerät zur Ausführung des Verfahrens,
Fig. 2    ein Schreib/Lesegerät mit separatem Detektionspfad und separaten Auswertungselementen,
Fig. 3    ein Abfragesignal,
Fig. 4a   ein Antwortsignal mit Bezug auf das Abfragesignal,
Fig. 4b   einen Vergleich von Antwortsignal mit einem Referenzsignal,
Fig. 5a   ein Abfragesignal mit Bezug auf das Kommunikationssignal mit gleicher Sendeleistung,
Fig. 5b   ein Abfragesignal und ein Kommunikationssignal mit reduzierter Sendeleistung,
Fig. 6    den Stromverbrauch im erfindungsgemässen Verfahren,
Fig. 7    ein Flussdiagramm des erfindungsgemässen Verfahrens.

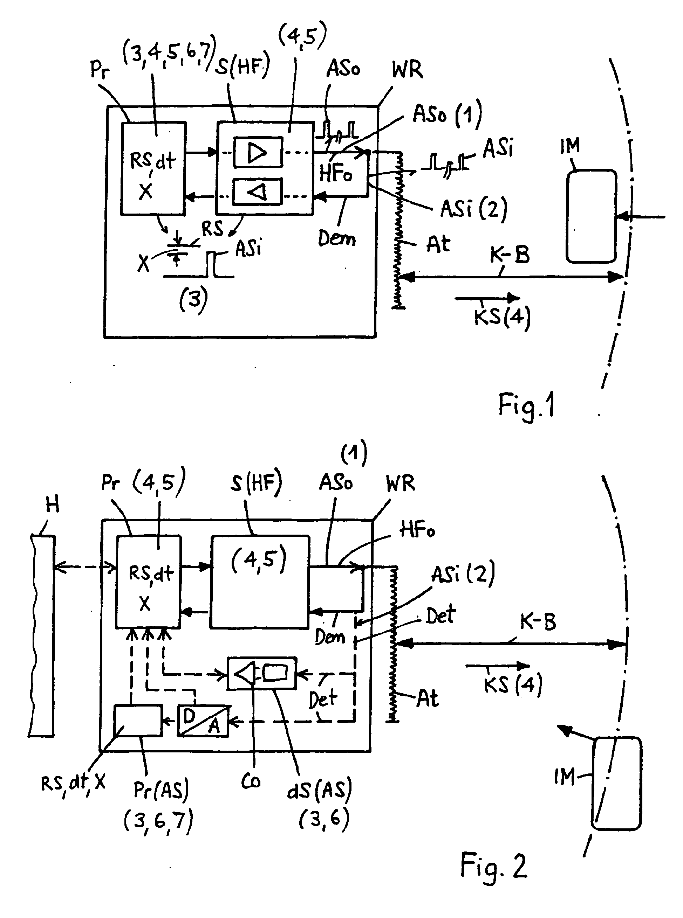

Fig. 1 zeigt ein Schreib/Lesegerät WR zur Ausführung des erfindungsgemässen Verfahrens zum Erkennen von Identifikationsmedien IM im Kommunikationsbereich K-B des Schreib/Lesegeräts WR. Das Schreib/Lesegerät enthält eine gemeinsame Antenne At zum Senden und Empfangen von HF-Signalen nach dem Prinzip der induktiven Kopplung eines HF-Feldes im MHz Frequenzbereich, einen direkt mit der Antenne verbundenen Sendepfad HFo, einen direkt mit der Antenne verbundenen Empfangspfad Dem, eine Schaltung S(HF) zur HF-Kommunikation (moduliert und nicht moduliert) mit einer Standard Sendeleistung P-HF und eine logische Schaltung Pr zum Auswerten einer Kommunikation zwischen dem Schreib/Lesegerät und einem Identifikationsmedium IM.

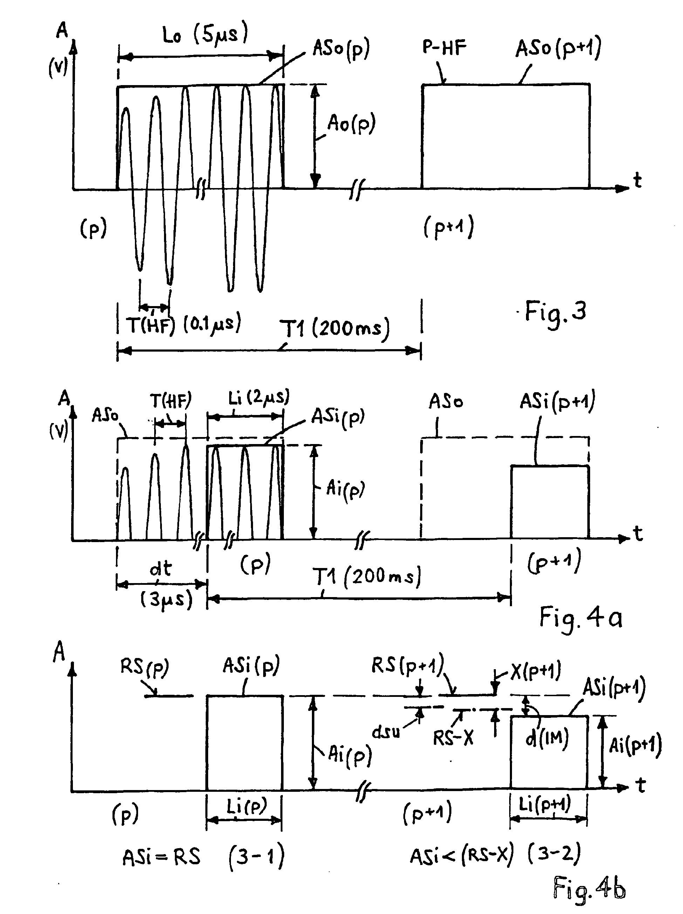

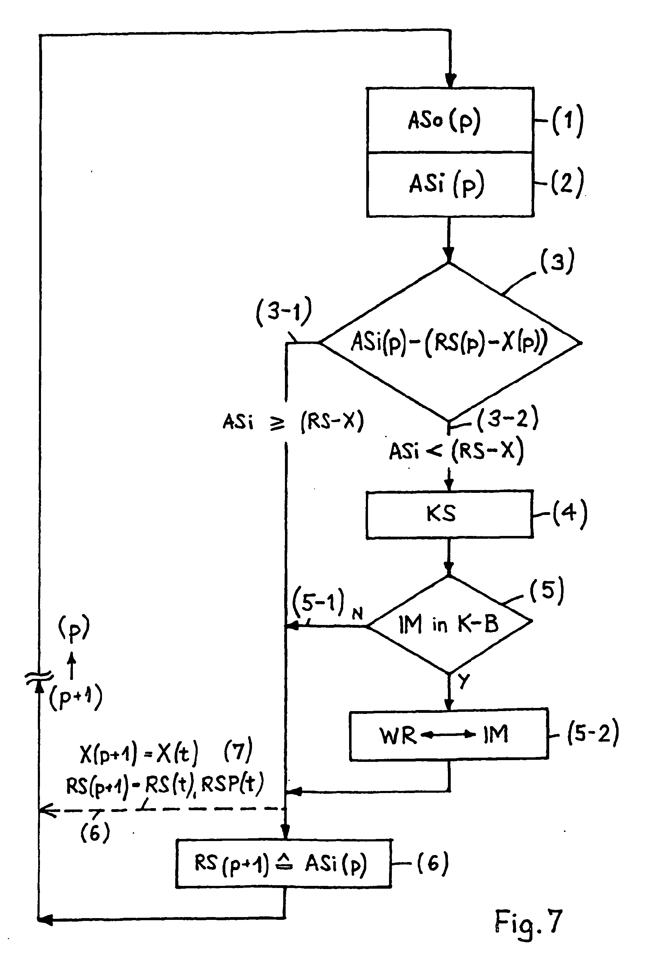

Zum Erkennen von Identifikationsmedien IM, welche in den Kommunikationsbereich K-B eintreten, wird über den Sendepfad HFo und die Antenne At periodisch ein kurzes Abfragesignal ASo, welches mehrere Grundschwingungen des HF-Feldes enthält, mit der Standard Sendeleistung P-HF ausgesendet (Verfahrensschritt 1), dann wird während dem Aussenden des Abfragesignals ASo ein Antwortsignal ASi, welches ebenfalls mehrere Grundschwingungen des HF-Feldes enthält, gleichzeitig an der Antenne detektiert (Verfahrensschritt 2), anschliessend wird das Antwortsignal ASi mit einem Referenzsignal RS verglichen (3) und dann ein Kommunikationssignal KS zum Erkennen eines Identifikationsmediums IM ausgesendet (4), falls sich das Antwortsignal ASi vom Referenzsignal RS unterscheidet (3-2). Andernfalls wird im nächsten Zyklus wieder ein Abfragesignal ASo gesendet (3-1). Zum Vergleich mit dem Antwortsignal ASi kann das Referenzsignal RS auch um einen Schwellenwert X reduziert sein (somit Referenzwert = RS - X, siehe Fig. 4b und 7).

Wird mit dem Kommunikationssignal KS ein berechtigtes Identifikationsmedium IM festgestellt und authentifiziert (5), so erfolgt eine Kommunikation (5-2) mit diesem. Nach Beendigung der Kommunikation wird wieder das Abfragesignal ASo ausgesendet. Dies wird auch weiter illustriert und erläutert im Schema von Fig. 7. Die Zwangsanregung der Antenne At mit den Grundschwingungen des HF-Feldes mit voller Sendeleistung P-HF ermöglicht, trotz entsprechend schwächerer induktiver Kopplung, auch das Erkennen von Identifikationsmedien IM mit von der Grundschwingung stark abweichenden Resonanzfrequenzen (von z.B. bis zu 18 MHz für 13.56 MHz RFID-Systeme).

Das erfindungsgemässe Verfahren kann in Schreib/Lesegeräten WR gemäss Fig. 1 bereits realisiert werden, wenn mit dessen Komponenten das Antwortsignal ASi über dem Empfangspfad Dem und in der Schaltung S(HF) detektiert und anschliessend in der logischen Schaltung Pr verarbeitet werden kann, z.B. mittels eines A/D-Wandlers. Diese Möglichkeit der Umsetzung ohne zusätzliche Komponenten ist ein wesentlicher Vorteil des erfindungsgemässen Verfahrens.

Die Fig. 2 zeigt verschiedene mögliche Ergänzungen mit zusätzlichen Komponenten, falls das Schreib/Lesegerät nicht alle Funktionen des Erkennungsverfahrens ausführen kann. Falls das Antwortsignal ASi über dem Empfangspfad Dem nicht detektiert oder in der logischen Schaltung Pr nicht ausgewertet werden kann, so können solche Schreib/Lesegeräte mit einer minimalen Komponentenerweiterung einfach nachgerüstet werden. Dann erfolgt die Detektion des Antwortsignals ASi über einen separaten Detektionspfad Det und beispielsweise die Auswertung des Antwortsignals und der Vergleich mit dem Referenzsignal RS durch eine diskrete Schaltung dS(AS) mit einem Komparator Co, oder nach einer A/D-Wandlung in einer zusätzlichen logischen Schaltung Pr(AS). Die Schaltungen dS(AS) und Pr(AS) können mit der logischen Schaltung Pr verbunden sein.

Ergänzend könnte auch ein Applikationsrechner H zur Koordination der Signale beitragen (wenn ein Applikationsrechner H Informationen über eine Funkverbindung an ein Schreib/Lesegerät WR übermitteln, jedoch keine Energiespeisung an das Schreib/Lesegerät liefern kann).

Wie in Fig. 2 gezeigt, kann der Vergleich von Antwortsignal ASi und Referenzsignal RS analog über einen Komparator Co einer diskreten Schaltung dS(AS) oder nach einer A/D-Wandlung digital durch die logische Schaltung Pr oder durch eine separate logische Schaltung Pr(AS) erfolgen.

Fig. 3 zeigt die Amplitude A in Funktion der Zeit t eines erfindungsgemässen Abfragesignals ASo, welches mit der Standard Sendeleistung P-HF erzeugt wird und welches mehrere (nicht modulierte, zwangsangeregte) Grundschwingungen des HF-Feldes enthält. Das kurze Abfragesignal ASo weist eine Pulslänge oder Signaldauer Lo von z.B. Lo = 4 - 10 us auf. Bei 10 MHz entspricht dies 40 - 100 Grundschwingungen mit einer Periodendauer T(HF) von 0.1 us. Das Abfragesignal wird periodisch mit einem Abfrageintervall T1 von z.B. T1 = 100 - 300 ms zwischen einer Abfrageperiode p und der nächsten Abfrageperiode p + 1 ausgesendet. Je nach Bedarf kann variabel auch ein längeres Abfrageintervall T1 von z.B. 1 - 3 sec gewählt werden mit entsprechend noch geringerem Energieverbrauch (z.B. während Randzeiten).

Fig. 4a zeigt die Amplitude A(t) in Funktion der Zeit eines Antwortsignals ASi, welches dem Abfragesignal ASo von Fig. 3 entspricht. Die Detektion des Antwortsignals ASi an der Antenne At (Fig. 1) erfolgt gleichzeitig mit dem Senden des Abfragesignals. Dabei wird das Antwortsignal ASi vorzugsweise erst nach einer definierten zeitlichen Verzögerung dt gemessen bzw. detektiert, d.h. in der 2. Hälfte bzw. gegen Ende des eingehenden Antwortsignals. Als Beispiel betrage hier die Pulslänge Lo des Abfragesignals Lo = 5 us, die zeitliche Verzögerung dt = 3 us und die Pulslänge des gemessenen Antwortsignals Li = 2 us. Bei 10 MHz entspräche dies 20 Grundschwingungen im detektierten Antwortsignal ASi. Vorzugsweise umfasst das Antwortsignal ASi mindestens 10 Grundschwingungen. In der Verzögerungszeit dt können Einschwingvorgänge stattfinden, so dass im detektierten Messbereich Li nur noch stabile Grundschwingungen als Antwortsignal detektiert werden.

Fig. 4b illustriert den Vergleich des detektierten Antwortsignals ASi mit dem Referenzsignals RS bzw. mit einem Referenzwert RS-X, d.h. einem um einen Schwellenwert X reduzierten Referenzsignal RS. In der Messperiode p (links in Fig. 4b) sei hier das Antwortsignal ASi(p) gleich gross wie das Referenzsignal RS(p) da kein Identifikationsmedium im Kommunikationsbereich K-B vorhanden ist, welches das Antwortsignal verkleinern würde. Dies entspricht dem Verfahrensschritt 3-1, d.h. es wird kein Kommunikationssignal KS ausgesendet, sondern in der nächsten Messperiode p + 1 wieder ein Abfragesignal ASo(p + 1). Ein Schwellenwert X kann beispielsweise einfach durch einen Komparator Co oder dessen Ansteuerung definiert werden.

Der Vergleich von Antwortsignal ASi mit dem Referenzsignal RS (bzw. mit einem Referenzwert RS-X) kann auf einfache Art mittels einer Messung der Amplituden Ai oder auch mittels einer geeignet definierten Messung der Pulslängen Li erfolgen.

Im Beispiel rechts in Fig. 4b wurde als besonders vorteilhafte Ausführung das vorherigen Antwortsignal ASi(p) als neues Referenzsignal RS(p + 1) gesetzt. Damit kann auf einfache Weise eine langsame Veränderung des Umgebungseinflusses, welche nicht von einem Identifikationsmedium bewirkt wird, kompensiert werden. Hier ist zusätzlich ein Schwellenwert X(p + 1) definiert, wobei das Antwortsignal ASi(p + 1) mit einem Referenzwert RS-X(p + 1) verglichen wird (gemäss Fig. 7). In diesem Fall sei ein Identifikationsmedium in den Kommunikationsbereich eingetreten und das Antwortsignal ASi(p + 1) ist entsprechend verkleinert, so dass ASi(p + 1) kleiner ist als RS-X (Verfahrensschritt 3-2). Entsprechend wird anschliessend ein Kommunikationssignal KS zur Authentifizierung des Identifikationsmediums IM ausgesendet (4).

Mit der Anpassung des Referenzsignals RS (indem z.B. laufend RS(p + 1) = ASi(p) gesetzt wird) werden im Prinzip langsame Veränderungen des Antwortsignals ASi durch Umgebungseinflüsse und Störungen kompensiert. Dazu kann das Referenzsignal auch gemäss einem gespeicherten Referenzsignalprofil RSP(t) zeitlich verändert werden, um bekannte zeitliche Änderungen von Umgebungseinflüssen zu kompensieren. Das Referenzsignal RS(t) kann auch selbstadaptierend verändert werden, indem bisherige Erfahrungsdaten bzw. Referenzsignale laufend neu berücksichtigt werden zur Erstellung und Speicherung eines neuen, adaptierten Referenzsignalprofils RSP(t). Beispielsweise kann die Relation von richtig erkannten zu falsch erkannten Identifikationsmedien in die Bestimmung der neuen Referenzwerte RS, bzw. auch des Schwellenwertes X, einbezogen werden.

Mit dem Schwellenwert X kann im Prinzip der Einfluss d(IM) eines Identifikationsmediums auf das Antwortsignal ASi sicher erfasst werden. Dazu wird der Schwellenwert X kleiner gewählt als der Einfluss d(IM) eines Identifikationsmediums, jedoch grösser als der Einfluss dsu von kurzfristigen Störungen und Umgebungsänderungen auf das Antwortsignal ASi.

In Fig. 4b ist dies schematisch illustriert: Beispielsweise betrage ein kurzfristiger Störungseinfluss dsu = 5%, ein Einfluss des Identifikationsmediums d(IM) = 10% und als Schwellenwert sei eingestellt: X = 7% von ASo. Dann wird der Störungseinfluss nicht detektiert (dsu ist kleiner als X), das Identifikationsmedium jedoch wird detektiert (d(IM) ist grösser als X). Mit dem Schwellenwert X kann somit die Empfindlichkeit der Detektion von Identifikationsmedien eingestellt werden.

Der Schwellenwert X kann z.B. 5 - 20%, vorzugsweise 5 - 10% des Abfragesignals ASo betragen. Der Schwellenwert X kann aber auch 0% betragen.

Dies wird auch zu Fig. 7 weiter erläutert.

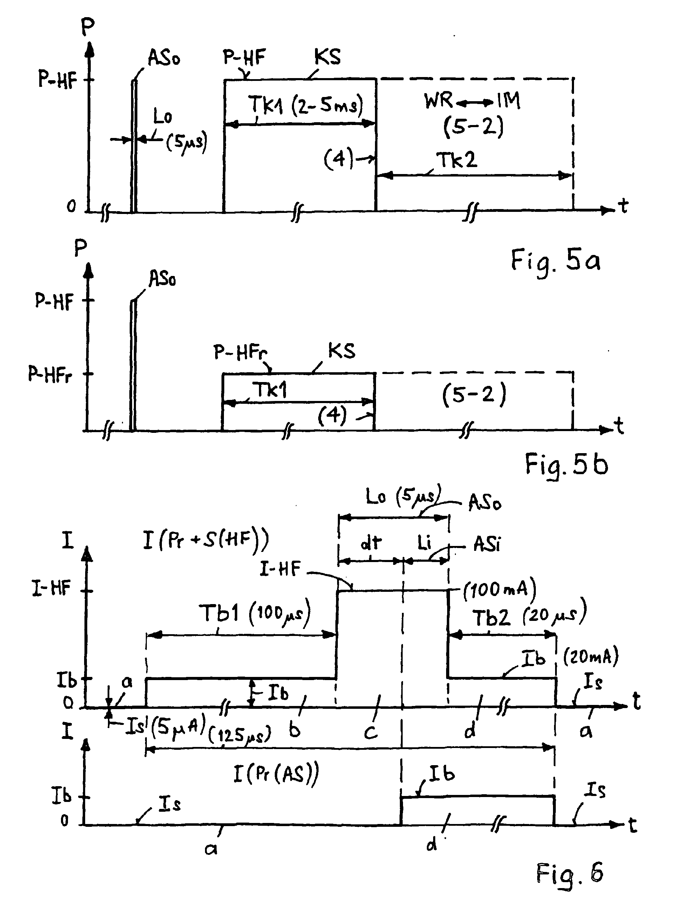

Fig. 5a zeigt den zeitlichen Verlauf der Sendeleistung P(t) eines Abfragesignals ASo und eines Kommunikationssignals KS, welche beide mit einer Standard-Sendeleistung P-HF erzeugt werden. Wie hier beispielsweise angegeben, ist die Pulslänge bzw. Signaldauer Lo des Abfragesignals ASo von z.B. Lo = 5 us um mindestens zwei Grössenordnungen kürzer als das Kommunikationssignal KS zur Authentifizierung eines detektierten Identifikationsmediums IM. Dessen Dauer Tk1 beträgt z.B. Tk1 = 2 - 5 ms und ist hier somit 400 - 100-mal länger als das Abfragesignal ASo mit einem entsprechend viel höherem Energiebedarf, wenn wie hier ein Kommunikationssignal KS anstelle des erfindungsgemässen kurzen Abfragesignals ASo periodisch zum Erkennen von Identifikationsmedien im Kommunikationsbereich ausgesendet wird. Mit dem Abfragesignal KS, welches dem Verfahrensschritt 4 entspricht, wird zuerst HF-Energie auf das passive Identifikationsmedium IM übertragen, dann wird ein moduliertes Authentifizierungssignal gesendet und anschliessend auf eine Antwort gewartet. Nach einer positiven Authentifizierung kann eine Kommunikation zwischen dem Schreib/Lesegerät WR und dem Identifikationsmedium IM ausgeführt werden in einer Zeit Tk2 (Schritt 5-2).

Fig. 5b zeigt ein Beispiel, bei dem das Kommunikationssignal KS mit einer um mindestens einen Faktor 2 reduzierten Sendeleistung P-HFr ausgesendet wird, während das Abfragesignal ASo immer mit voller Sendeleistung P-HF ausgesendet wird. So wird ein Identifikationsmedium IM beim Eintreten in den Kommunikationsbereich K-B früh detektiert, während die Kommunikation mit dem Schreib/Lesegerät WR anschliessend - in Anwendungen, wo das Identifikationsmedium relativ nahe an die Antenne des Schreib/Lesegeräts gehalten wird - auch mit dieser reduzierten Sendeleistung P-HFr sicher ausgeführt werden kann. Es kann auch zuerst ein Kommunikationssignal KS mit reduzierter Sendeleistung und falls damit keine Authentifizierung erfolgt, ummittelbar anschliessend nochmals ein Kommunikationssignal KS mit voller Sendeleistung P-HF ausgesendet werden.

Basierend auf Erfahrungsdaten kann das Schreib/Lesegerät WR auch adaptiv, selbstlernend festlegen, ob die Kommunikation KS mit der Standard-Sendeleistung P-HF oder mit einer reduzierten Sendeleistung P-HFr ausgesendet werden soll.

Fig. 6 zeigt den Stromverbrauch im erfindungsgemässen Verfahren beim Aussenden eines Abfragesignals ASo. Die obere Darstellung von Fig. 6 zeigt den Stromverbrauch I(t) der logischen Schaltung Pr und der HF-Schaltung S(HF). Im Ruhezustand beträgt der Stromverbrauch Is (Stand-by-Strom) z.B. 5 uA (a). Vor dem Senden des Abfragesignals ASo müssen die Schaltungen Pr und S(HF) zum Einschwingen eines Quarzes während einer Zeit Tb1 von z.B. 100 - 150 us in einen Betriebszustand (b) versetzt werden mit einem Betriebsstrom, Ib von z.B. 20 mA.

Dann erfolgt das Senden des Abfragesignals ASo mit einem Strom I-HF von z.B. 100 mA während einer Sendedauer Lo von z.B. 5 us (c). Anschliessend folgt das Auswerten des Antwortsignals ASi mit dem Betriebsstrom Ib und in einer Zeit Tb2 von z.B. 20 us (d). Die ganze Einschaltdauer beträgt hier z.B. 125 us, die sehr kurze Messzeit weniger als 10 us. Im unteren Teil von Fig. 6 ist der benötigte Betriebsstrom Ib einer zusätzlichen logischen Schaltung Pr(AS) dargestellt, falls die Auswertung (d) damit erfolgt und nicht mit der logischen Schaltung Pr. Der Stromverbrauch für das Aussenden eines Abfragesignals ASo beträgt somit beispielsweise:

$$Ib \times (Tb1 + Tb2) + I\text{-}HF \times Lo = 20 \text{ mA} \times 120 \text{ us} + 100 \text{ mA} \times 5\text{us} = 2.9 \text{ uAs.}$$

Das Aussenden eines Kommunikationssignals KS gemäss Fig. 5a erfordert dagegen einen Stromverbrauch von z.B.

$$I\text{-}HF \times Tk1 = 100 \text{ mA} \times 4\text{ms} = 400 \text{ uAs,}$$

d.h. mehr als das 100-fache des Stromverbrauchs für ein Abfragesignal ASo.

Fig. 7 zeigt in Form eines Flussdiagramms das erfindungsgemässe Verfahren und die verschiedenen Möglichkeiten, welche sich beim Vergleich des Antwortsignals ASi mit dem Referenzsignal RS bzw. mit RS-X ergeben können. Nach dem Aussenden des Abfragesignals ASo (Verfahrensschritt 1) und dem Detektieren eines Antwortsignals ASi (2) wird das Antwortsignal ASi(p) der Abfrageperiode (p) mit dem Referenzsignal RS(p) verglichen (3), bzw. mit einem um einen Schwellenwert X reduzierten Referenzwert RS(p) - X(p) verglichen.

Ist in dieser Periode (p) das Antwortsignal ASi(p) grösser oder gleich dem Referenzwert (RS-X)(p), wird wie bisher in der nächsten Periode (p + 1) wieder ein Abfragesignal ASo ausgesendet (Schritt 3-1).

Ist das Antwortsignal ASi(p) kleiner als der Referenzwert (ASi < RS - X) (Schritt 3-2), wird ein Kommunikationssignal KS ausgesendet (4). Falls sich kein berechtigtes Identifikationsmedium IM innerhalb des Kommunikationsbereichs K-B befindet und erfolgreich authentifiziert wird (weil sich das Antwortsignal durch Kopplung mit einem nicht berechtigten Identifikationsmedium oder durch Umgebungseinflüsse und nicht durch die neue Präsenz eines berechtigten Identifikationsmediums IM verändert hat) so wird wie bisher in der nächsten Abfrageperiode (p + 1) ein Abfragesignal ASo ausgesendet (Schritt 5-1).

Falls ein berechtigtes Identifikationsmedium IM erkannt wird, erfolgt zwischen diesem und dem Schreib/Lesegerät WR (nach erfolgreicher Authentifizierung) eine Kommunikation, z.B. zur Ausführung einer Applikation (5-2).

Nach Beendigung der Kommunikation wird in der nächstmöglichen Periode wieder ein Abfragesignals ASo ausgesendet.

Für die nächste Abfrageperiode (p + 1) kann normalerweise ein neues Referenzsignal RS(p + 1) gesetzt werden (Schritt 6). Falls nötig kann in Ausnahmefällen auch ein neuer Schwellenwert X(p + 1) gesetzt werden (Schritt 7).

Fig. 7 zeigt weiter eine einfache und vorteilhafte Möglichkeit Umgebungs- und Störungseinflüsse (durch andere Gegenstände , z.B. durch einen Metallschrank, der in die Nähe des Schreib/Lesegeräts WR verschoben wird) zu minimieren. Dazu kann adaptiv das Antwortsignal ASi(p) der Periode (p) als Referenzsignal RS(p + 1) für die nächste Periode (p + 1) verwendet werden. Damit wird ein Umgebungs- oder Störungseinfluss auf das Antwortsignal mit dem neuen Referenzsignal laufend angepasst und kompensiert.

Falls in der Periode (p + 1) zusätzlich ein Identifikationsmedium IM in den Kommunikationsbereich K-B gelangt, und dadurch das Antwortsignal ASi(p + 1) mindestens um den Schwellenwert X verkleinert wird, so wird dies erkannt (3-2) und das Kommunikationssignal KS ausgesendet (4). Wie zu Fig. 4b erläutert wird, kann mit einem einstellbaren Schwellenwert die Störungsempfindlichkeit minimiert werden.

Ein einfaches Anwendungsbeispiel für das erfindungsgemässe Verfahren stellt ein mechanisches und elektronisches Schloss dar mit einer Batterie als Energieversorgung und mit mechanischen Schlüsseln, welche auch ein Identifikationsmedium als elektronischen Schlüssel enthalten. Das bisherige Detektionsverfahren mit periodischem Aussenden eines Kommunikationssignals KS ist hier gar nicht einsetzbar wegen viel zu hohem Energiebedarf aus der Batterie. Deshalb mussten bisher zusätzliche mechanische Kontakte und elektronische Schalter eingesetzt werden, um ein Identifikationsmedium zu detektieren und die Kommunikation mit diesem einzuschalten. Mit dem erfindungsgemässen Verfahren entfällt dieser zusätzliche Aufwand und die Detektion eines Identifikationsmediums kann damit rascher und sicherer ausgeführt werden mit sehr geringem Stromverbrauch aus der Batterie.

In der Beschreibung werden folgende Bezeichnungen verwendet:

IM          Identifikationsmedium, Tag, Karte

K-B         Kommunikationsbereich, Nahbereich

At          Antenne

WR          Schreib/Lesegerät

HFo         Sendepfad

Dem         Empfangspfad

ASo         Abfragesignal, ausgesendet

ASi         Antwortsignal, detektiert

RS          Referenzsignal

RSP         Referenzsignalprofil

KS          Kommunikationssignal, Abfragesignal zur Authentifizierung und Kommunikation mit einem IM

Det         separater Detektionspfad

| Co | Komparator |
|---|---|
| X | Schwellenwert |
| S(HF) | HF-Schaltung, Bauteil von WR |
| dS(AS) | separate diskrete Schaltung für ASi |
| Pr | logische Schaltung, Mikroprozessor von WR |
| Pr(AS) | separate logische Schaltung zum Auswerten von ASi |
| P-HF | Standard Sendeleistung von S(HF) |
| P-HFr | reduzierte Sendeleistung von S (HF) |
| t | Zeit |
| dt | zeitliche Verzögerung für ASi |
| T(HF) | Periodendauer der Grundschwingung |
| T1 | Abfrageintervall |
| Tk1, Tk2 | Dauer von KS |
| Tb1, Tb2 | Einschaltdauer von Ib |
| p | Nummer der Abfrageperiode, Messperiode |
| A,Ao,Ai | Amplituden |
| L,Lo,Li | Pulslängen, Signaldauer |
| Lo | Messzeit |
| dsu | Störungseinfluss |
| d(IM) | Einfluss von IM |
| H | Applikationsrechner, Hintergrundsystem |
| I | Stromverbrauch |
| Is | Stand-by-Strom |
| Ib | Stromverbrauch im Betriebszustand |
| I-HF | Stromverbrauch beim Aussenden eines HF-Signals |
| 1 - 7 | Verfahrensschritte |
| 1 | ASo aussenden |
| 2 | ASi empfangen, detektieren |
| 3 | ASi mit RS, bzw. mit RS-X vergleichen |

| 3-1 | ASi grösser/gleich RS, bzw. RS-X |
|-----|-----|
| 3-2 | ASi kleiner als RS, bzw. RS-X |
| 4 | Senden von KS |
| 5 | Authentifizierung |
| 5-2 | Kommunikation mit IM |
| 6 | Setzen RS |
| 7 | Setzen X |

**Patentansprüche**

1. Verfahren zum Erkennen von Identifikationsmedien (IM) im Kommunikationsbereich (K-B) einer Antenne (At) zum Senden und Empfangen von HF-Signalen eines Schreib/Lesegeräts (WR), welches nach dem Prinzip der induktiven Kopplung eines HF-Feldes im MHz Frequenzbereich arbeitet und welches
einen direkt mit der Antenne verbundenen Sendepfad (HFo),
einen direkt mit der Antenne verbundenen Empfangspfad (Dem),
eine Schaltung (S(HF)) zur HF-Kommunikation mit einer Standard Sendeleistung (P-HF) oder kleiner
und eine logische Schaltung (Pr) zum Auswerten einer Kommunikation zwischen dem Schreib/Lesegerät (WR) und einem Identifikationsmedium (IM) aufweist, wobei über den Sendepfad (HFo) und die Antenne (At) periodisch ein kurzes Abfragesignal (ASo), welches mehrere Grundschwingungen des HF-Feldes enthält,
mit der Standard Sendeleistung (P-HF) ausgesendet wird (1), **dadurch gekennzeichnet, dass** während dem Aussenden des Abfragesignals (ASo) nach einer definierten zeitlichen Verzögerung (dt) ab dem Beginn des Aussendens (1) des Abfragesignals (ASo) ein Antwortsignal (ASi) mit mehreren Grundschwingungen des HF-Feldes an der Antenne (At) detektiert wird (2), dann
das nach der definierten zeitlichen Verzögerung (dt) detektierte Antwortsignal (ASi) mit einem Referenzsignal (RS) verglichen wird (3)
und dann ein Kommunikationssignal (KS) zum Erkennen eines Identifikationsmediums (IM) ausgesandt wird (4), falls sich das nach der definierten zeitlichen Verzögerung (dt) detektierte Antwortsignal (ASi) vom Referenzsignal (RS) unterscheidet (3-2).

2. Verfahren nach Anspruch 1, **dadurch gekennzeichnet, dass** das Abfragesignal (ASo) um mindestens zwei Grössenordnungen kürzer ist als das Kommunikationssignal (KS).

3. Verfahren nach Anspruch 1, **dadurch gekennzeichnet, dass** das Detektieren (2) des Antwortsignals (ASi) über den Empfangspfad (Dem) erfolgt

4. Verfahren nach Anspruch 1, **dadurch gekennzeichnet, dass** das Detektieren (2) des Antwortsignals (ASi) über einen separaten Detektionspfad (Det) erfolgt

5. Verfahren nach Anspruch 1, **dadurch gekennzeichnet, dass** der Vergleich (3) von Antwortsignal (ASi) und Referenzsignal (RS) durch die logische Schaltung (Pr) erfolgt.

6. Verfahren nach Anspruch 1, **dadurch gekennzeichnet, dass** der Vergleich (3) von Antwortsignal (ASi) und Referenzsignal (RS) in einer separaten logischen Schaltung (Pr(AS)) erfolgt.

7. Verfahren nach Anspruch 1, **dadurch gekennzeichnet, dass** der Vergleich (3) von Antwortsignal (ASi) und Referenzsignal (RS) mittels einer separaten diskreten Schaltung (dS(AS)) erfolgt.

8. Verfahren nach Anspruch 1, **dadurch gekennzeichnet, dass** das Antwortsignal (ASi (p)) der laufenden Messperiode (p) als Referenzsignal (RS (p + 1)) für die nächste Messperiode (p + 1) verwendet wird (6).

9. Verfahren nach Anspruch 1, **dadurch gekennzeichnet, dass** das Referenzsignal (RS) gemäss einem gespeicherten Referenzsignalprofil (RSP(t)) zeitlich verändert wird (6).

10. Verfahren nach Anspruch 1, **dadurch gekennzeichnet, dass** das Referenzsignal (RS(t)) zeitlich selbstadaptierend ist (6).

11. Verfahren nach Anspruch 1, **dadurch gekennzeichnet, dass** die Amplituden (A) von Antwortsignal (ASi) und Referenzsignal (RS) verglichen werden (3).

12. Verfahren nach Anspruch 1, **dadurch gekennzeichnet, dass** die Pulslängen (L) von Antwortsignal (ASi) und Referenzsignal (RS) verglichen werden (3).

13. Verfahren nach Anspruch 1, **dadurch gekennzeichnet, dass** das Aussenden (4) eines Kommunikationssignals (KS) erfolgt, falls das Antwortsignal (ASi) um einen definierten Schwellenwert (X) unter dem Referenzsignals (RS) liegt (3-2): ASi < RS - X.

14. Verfahren nach Anspruch 1, **dadurch gekennzeichnet, dass** der Vergleich (3) von Antwortsignal (ASi) und Referenzsignal (RS) analog über einen Komparator (Co) einer diskreten Schaltung (dS(AS)) erfolgt

15. Verfahren nach Anspruch 1, **dadurch gekennzeichnet, dass** der Vergleich (3) von Antwortsignal (ASi) und Referenzsignal (RS) nach einer A/D-Wandlung digital durch die logische Schaltung (Pr) oder durch eine separate logische Schaltung (Pr(AS)) erfolgt.

16. Verfahren nach Anspruch 13, **dadurch gekennzeichnet, dass** der Schwellenwert (X) durch einen Komparator (Co) oder dessen Ansteuerung definiert wird.

17. Verfahren nach Anspruch 1, **dadurch gekennzeichnet, dass** das Antwortsignal (ASi), nach der definierten zeitlichen Verzögerung (dt), in der zweiten Hälfte des Abfragesignals (ASo) gemessen wird.

18. Verfahren nach Anspruch 1, **dadurch gekennzeichnet, dass** das Antwortsignal (ASi) mindestens 10 Grundschwingungen des HF-Feldes enthält.

19. Verfahren nach Anspruch 1, **dadurch gekennzeichnet, dass** die logische Schaltung (Pr) vor dem Senden des Abfragesignals (ASo) von einem Ruhezustand (Is) in einen Betriebszustand (Ib) versetzt wird.

20. Verfahren nach Anspruch 1, **dadurch gekennzeichnet, dass** das Kommunikationssignal (KS) mit einer um mindestens einen Faktor 2 reduzierten Sendeleistung (P-HFr) ausgesendet wird.

21. Verfahren nach Anspruch 1, **dadurch gekennzeichnet, dass** das Schreib/Lesegerät (WR) adaptiv selbstlernend festlegt, ob das Kommunikationssignal (KS) mit Standard Sendeleistung (P-HF) oder mit reduzierter Sendeleistung (P-HFr) ausgesendet wird.

22. Schreib/Lesegerät zum Erkennen von Identifikationsmedien (IM) im Kommunikationsbereich (K-B) einer Antenne (At) zum Senden und Empfangen von HF-Signalen des Schreib/Lesegeräts (WR), welches nach dem Prinzip der induktiven Kopplung eines HF-Feldes im MHz Frequenzbereich arbeitet und welches einen direkt mit der Antenne verbundenen Sendepfad (HFo),
einen direkt mit der Antenne verbundenen Empfangspfad (Dem),
eine Schaltung (S(HF)) zur HF-Kommunikation mit einer Standard Sendeleistung (P. HF) oder kleiner
und eine logische Schaltung (Pr) zum Auswerten einer Kommunikation zwischen dem Schreib/Lesegerät (WR) und einem Identifikationsmedium (IM) aufweist, wobei über den Sendepfad (HFo) und die Antenne (At) periodisch ein kurzes Abfragesignal (ASo), welches mehrere Grundschwingungen des HF-Feldes enthält,
mit der Standard Sendeleistung (P-HF) aussendbar ist (1),
**dadurch gekennzeichnet, dass** während dem Aussenden des Abfragesignals (ASo) nach einer definierten zeitlichen Verzögerung (dt) ab dem Beginn des Aussendens (1) des Abfragesignals (ASo) ein Antwortsignal (ASi) mit mehreren Grundschwingungen des HF-Feldes an der Antenne (At) detektierbar ist (2),
dann das nach der definierten zeitlichen Verzögerung (dt) detektierte Antwortsignal (ASi) mit einem Referenzsignal (RS) vergleichbar ist (3)
und dann ein Kommunikationssignal (KS) zum Erkennen eines Identifikationsmediums (IM) aussendbar ist (4), falls sich das nach der definierten zeitlichen Verzögerung (dt) detektierte Antwortsignal (ASi) vom Referenzsignal (RS) unterscheidet (3-2).

**Claims**

1. A method for detecting identification media (IM) within the communication range (K-B) of an antenna (At) for transmitting and receiving RF signals of a read/write unit (WR) which operates in accordance with the principle of inductive coupling of an RF field in the MHz frequency band and which has a transmitting path (HFo) connected directly to the antenna,
   a receiving path (Dem) connected directly to the antenna,
   a circuit (S(HF)) for RF communication with a standard transmitting power (P-HF) or less, and a logical circuit (Pr) for evaluating a communication between the read/write unit (WR) and an identification medium (IM), whereby
   a short polling signal (ASo), which contains a number of fundamental oscillations of the RF field, is periodically emitted with the standard transmitting power (P-HF) via the transmitting path (HFo) and the antenna (At) (1), **characterized**
   **in that** during the emission of the polling signal (ASo), after a defined time delay (dt) from the beginning of the emission (1) of the polling signal (ASo), a return signal (ASi) with a number of fundamental oscillations of the RF field is detected at the antenna (At) (2),
   then the return signal (ASi), detected after the defined time delay (dt), is compared with a reference signal (RS) (3), and then a communication signal (KS) is emitted for detecting an identification medium (IM) (4) if the return signal (ASi), detected after the defined time delay (dt), differs from the reference signal (RS) (3-2).

2. A method according to claim 1, **characterized in that** the polling signal (ASo) is shorter by at least two orders of magnitude than the communication signal (KS).

3. A method according to claim 1, **characterized in that** the detection (2) of the return signal (ASi) is effected via the receiving path (Dem).

4. A method according to claim 1, **characterized in that** the detection (2) of the return signal (ASi) is effected via a separate detection path (Det).

5. A method according to claim 1, **characterized in that** the comparison (3) of return signal (ASi) and reference signal (RS) is effected by the logical circuit (Pr).

6. A method according to claim 1, **characterized in that** the comparison (3) of return signal (ASi) and reference signal (RS) is effected in a separate logical circuit (Pr(AS)).

7. A method according to claim 1, **characterized in that** the comparison (3) of return signal (ASi) and reference signal (RS) is effected by means of a separate discrete circuit (dS(AS)).

8. A method according to claim 1, **characterized in that** the return signal (ASi(p)) of the current measuring period (p) is used as reference signal (RS(p + 1)) for the next measuring period (p + 1) (6).

9. A method according to claim 1, **characterized in that** the reference signal (RS) is changed over time in accordance with a stored reference signal profile (RSP(t)) (6).

10. A method according to claim 1, **characterized in that** the reference signal (RS(t)) is self-adapting over time (6).

11. A method according to claim 1, **characterized in that** the amplitudes (A) of return signal (ASi) and reference signal (RS) are compared (3).

12. A method according to claim 1, **characterized in that** the pulse widths (L) of return signal (ASi) and reference signal (RS) are compared (3).

13. A method according to claim 1, **characterized in that** the emission (4) of a communication signal (KS) takes place if the return signal (ASi) is below the reference signal (RS) by a defined threshold value (X) (3-2): ASi < RS - X.

14. A method according to claim 1, **characterized in that** the comparison (3) of return signal (ASi) and reference signal (RS) is effected by analog means via a comparator (Co) of a discrete circuit (dS(AS)).

15. A method according to claim 1, **characterized in that** the comparison (3) of return signal (ASi) and reference signal (RS), after an A/D conversion, is effected by digital means by the logical circuit (Pr) or by a separate logical circuit (Pr(AS)).

16. A method according to claim 13, **characterized in that** the threshold value (X) is defined by a comparator (Co) or its drive system.

17. A method according to claim 1, **characterized in that** the return signal (ASi) is measured, after the defined time delay (dt), in the second half of the polling signal (ASo).

18. A method according to claim 1, **characterized in that** the return signal (ASi) contains at least 10 fundamental oscillations of the RF field.

19. A method according to claim 1, **characterized in that** the logical circuit (Pr) is set from an idle mode (Is) into an operating mode (Ib) before transmitting the polling signal (ASo).

20. A method according to claim 1, **characterized in that** the communication signal (KS) is emitted with a transmitting power (P-HFr) reduced by at least a factor of 2.

21. A method according to claim 1, **characterized in that** the read/write unit (WR) adaptively determines in a self-learning manner whether the communication signal (KS) is emitted with standard transmitting power (P-HF) or with reduced transmitting power (P-HFr).

22. A read/write unit for detecting identification media (IM) within the communication range (K-B) of an antenna (At) for transmitting and receiving RF signals of the read/write unit (WR) which operates in accordance with the principle of inductive coupling of an RF field in the MHz frequency band and which has a transmitting path (HFo) connected directly to the antenna,
a receiving path (Dem) connected directly to the antenna,
a circuit (S(HF)) for RF communication with a standard transmitting power (P-HF) or less, and a logical circuit (Pr) for evaluating a communication between the read/write unit (WR) and an identification medium (IM), whereby
a short polling signal (ASo), which contains a number of fundamental oscillations of the RF field, can be periodically emitted with the standard transmitting power (P-HF) via the transmitting path (HFo) and the antenna (At) (1), **characterized
in that** during the emission of the polling signal (ASo), after a defined time delay (dt) from the beginning of the emission (1) of the polling signal (ASo), a return signal (ASi) with a number of fundamental oscillations of the RF field can be detected at the antenna (At) (2),
then the return signal (ASi), detected after the defined time delay (dt), can be compared with a reference signal (RS) (3),
and then a communication signal (KS) can be emitted for detecting an identification medium (IM) (4) if the return signal (ASi), detected after the defined time delay (dt), differs from the reference signal (RS) (3-2).

**Revendications**

1. Procédé pour détecter des supports d'identification (IM) dans le domaine de communication (K-B) d'une antenne (At) destinée à émettre et à recevoir des signaux HF d'un appareil de lecture/écriture (WR), lequel fonctionne selon le principe du couplage inductif d'un champ HF dans la plage des fréquences des MHz et lequel présente un chemin d'émission (HFo) relié directement avec l'antenne, un chemin de réception (Dem) relié directement avec l'antenne, un circuit (S(HF)) pour la communication HF avec une puissance d'émission standard (P-HF) ou inférieure et un circuit logique (Pr) pour interpréter une communication entre l'appareil de lecture/écriture (WR) et un support d'identification (IM), un bref signal d'interrogation (Aso), lequel contient plusieurs composantes fondamentales du champ HF, étant émis périodiquement à la puissance d'émission standard (P-HF) par le biais du chemin d'émission (HFo) et de l'antenne (At), **caractérisé en ce que** pendant l'émission du signal d'interrogation (Aso), après un retard (dt) défini à partir du début de l'émission (1) du signal d'interrogation (Aso), un signal de réponse (ASi) comprenant plusieurs composantes fondamentales du champ HF est détecté (2) au niveau de l'antenne (At), puis le signal de réponse (ASi) détecté après le retard (dt) défini est comparé (3) avec un signal de référence (RS) et ensuite un signal de communication (KS) destiné à détecter un support d'identification (IM) est émis (4) si le signal de réponse (ASi) détecté après le retard (dt) défini est différent (3-2) du signal de référence (RS).

2. Procédé selon la revendication 1, **caractérisé en ce que** le signal d'interrogation (Aso) est au moins de deux ordres de grandeur plus court que le signal de communication (KS).

3. Procédé selon la revendication 1, **caractérisé en ce que** la détection (2) du signal de réponse (ASi) s'effectue par le biais du chemin de réception (Dem).

4. Procédé selon la revendication 1, **caractérisé en ce que** la détection (2) du signal de réponse (ASi) s'effectue par le biais d'un chemin de détection (Det) séparé.

5. Procédé selon la revendication 1, **caractérisé en ce que** la comparaison (3) du signal de réponse (ASi) et du signal de référence (RS) est effectuée par le circuit logique (Pr).

6. Procédé selon la revendication 1, **caractérisé en ce que** la comparaison (3) du signal de réponse (ASi) et du signal de référence (RS) est effectuée dans un circuit logique séparé (Pr(AS)).

7. Procédé selon la revendication 1, **caractérisé en ce que** la comparaison (3) du signal de réponse (ASi) et du signal de référence (RS) est effectuée au moyen d'un circuit discret séparé (dS(AS)).

8. Procédé selon la revendication 1, **caractérisé en ce que** le signal de réponse (ASi(p)) de la période de mesure courante (p) est utilisé (6) comme signal de référence (RS(p+1)) pour la période de mesure suivante (p+1).

9. Procédé selon la revendication 1, **caractérisé en ce que** le signal de référence (RS) est modifié dans le temps (6) conformément à un profil de signal de référence (RSP(t)) mémorisé.

10. Procédé selon la revendication 1, **caractérisé en ce que** le signal de référence (RS(t)) est auto-adaptable dans le temps (6).

11. Procédé selon la revendication 1, **caractérisé en ce que** les amplitudes (A) du signal de réponse (ASi) et du signal de référence (RS) sont comparées (3).

12. Procédé selon la revendication 1, **caractérisé en ce que** les longueurs d'impulsion (L) du signal de réponse (ASi) et du signal de référence (RS) sont comparées (3).

13. Procédé selon la revendication 1, **caractérisé en ce que** l'émission (4) d'un signal de communication (KS) a lieu dans le cas où le signal de réponse (ASi) est inférieur (3-2) au signal de référence (RS) d'une valeur de seuil (X) définie : ASi < RS-X.

14. Procédé selon la revendication 1, **caractérisé en ce que** la comparaison (3) du signal de réponse (ASi) et du signal de référence (RS) est effectuée de manière analogique par le biais d'un comparateur (Co) d'un circuit discret (dS (AS)).

15. Procédé selon la revendication 1, **caractérisé en ce que** la comparaison (3) du signal de réponse (ASi) et du signal de référence (RS) est effectuée de manière numérique après une conversion A/N par le circuit logique (Pr) ou par un circuit logique séparé (Pr(AS)).

16. Procédé selon la revendication 13, **caractérisé en ce que** la valeur de seuil (X) est définie par un comparateur (Co) ou sa commande.

17. Procédé selon la revendication 1, **caractérisé en ce que** le signal de réponse (ASi) est mesuré après le retard (dt) défini, dans la deuxième moitié du signal d'interrogation (Aso).

18. Procédé selon la revendication 1, **caractérisé en ce que** le signal de réponse (ASi) contient au moins 10 composantes fondamentales du champ HF.

19. Procédé selon la revendication 1, **caractérisé en ce que** le circuit logique (Pr), avant l'émission du signal d'interrogation (ASo), est basculé d'un état de repos (Is) à un état opérationnel (Ib).

**20.** Procédé selon la revendication 1, **caractérisé en ce que** le signal de communication (KS) est émis avec une puissance d'émission (P-HFr) réduite d'au moins un facteur 2.

**21.** Procédé selon la revendication 1, **caractérisé en ce que** l'appareil de lecture/écriture (WR) détermine par auto-apprentissage adaptatif si le signal de communication (KS) est émis avec la puissance d'émission standard (P-HF) ou avec la puissance d'émission réduite (P-HFr).

**22.** Appareil de lecture/écriture pour détecter des supports d'identification (IM) dans le domaine de communication (K-B) d'une antenne (At) destinée à émettre et à recevoir des signaux HF de l'appareil de lecture/écriture (WR), lequel fonctionne selon le principe du couplage inductif d'un champ HF dans la plage des fréquences des MHz et lequel présente un chemin d'émission (HFo) relié directement avec l'antenne, un chemin de réception (Dem) relié directement avec l'antenne, un circuit (S(HF)) pour la communication HF avec une puissance d'émission standard (P-HF) ou inférieure et un circuit logique (Pr) pour interpréter une communication entre l'appareil de lecture/écriture (WR) et un support d'identification (IM), un bref signal d'interrogation (Aso), lequel contient plusieurs composantes fondamentales du champ HF, pouvant être émis périodiquement à la puissance d'émission standard (P-HF) par le biais du chemin d'émission (HFo) et de l'antenne (At), **caractérisé en ce que** pendant l'émission du signal d'interrogation (Aso), après un retard (dt) défini à partir du début de l'émission (1) du signal d'interrogation (Aso), un signal de réponse (ASi) comprenant plusieurs composantes fondamentales du champ HF peut être détecté (2) au niveau de l'antenne (At), puis le signal de réponse (ASi) détecté après le retard (dt) défini peut être comparé (3) avec un signal de référence (RS) et ensuite un signal de communication (KS) destiné à détecter un support d'identification (IM) peut être émis (4) si le signal de réponse (ASi) détecté après le retard (dt) défini est différent (3-2) du signal de référence (RS).

Fig.1

Fig. 2

Fig. 3

Fig. 4a

Fig. 4b

$ASi = RS$  (3-1)          $ASi < (RS-X)$  (3-2)

Fig. 5a

Fig. 5b

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0944014 A
- WO 9734265 A
- WO 03052672 A